# EUROPÄISCHE PATENTSCHRIFT

(11) **EP 0 580 976 B1**
(45) Veröffentlichungstag und Bekanntmachung des Hinweises auf die Patenterteilung: **18.02.1998**
(21) Anmeldenummer: 93108160.8
(22) Anmeldetag: 19.05.1993
(51) Int. Cl.: H04H 1/00, H04H 3/00

(54) **Verfahren zur Übertragung regional unterschiedlicher Informationen in Gleichwellennetzen**
Method for transmitting regionally different information in a common-wave network
Procédé de transmission d'informations différentes suivant la région dans un réseau à onde commune

(30) Priorität: 11.07.1992 DE 4222877
(43) Veröffentlichungstag der Anmeldung: 02.02.1994
(73) Patentinhaber: GRUNDIG Aktiengesellschaft, 90762 Fürth (DE)
(72) Erfinder: Zumkeller, Markus, Dipl.-Ing., Grundig E.M.V., W-8510 Fürth/Bay (DE); Reis, Johannes, Dipl.-Ing., Grundig E.M.V., W-8510 Fürth/Bay (DE)

(56) Entgegenhaltungen:
- EP-A- 0 415 132
- FERNSEH UND KINO TECHNIK Bd. 45, Nr. 11 , 1991 , BERLIN DE Seiten 575 - 583 F.MÜLLER-RÖMER 'Digitale terrestrische Sendernetze für Hörfunk und Fernsehen'

## Beschreibung

Die Erfindung betrifft ein Verfahren zur Übertragung regional unterschiedlicher Informationen in Gleichwellennetzen und einen Empfänger zum Empfangen regional unterschiedlicher Informationen.

Eine qualitativ hochwertige Hörfunkübertragung, die dem von digitalen Speichermedien (Compact-Disc, DAT) gebotenen Qualitätsstandard entspricht, ist mit dem heutigen analogen UKW-Übertragungsverfahren, besonders beim mobilen Empfang im Kraftfahrzeug oder mit tragbaren Geräten nicht möglich. Feldstärkeschwankungen und Mehrwegeempfang führen zu Signalverzerrungen, deren Auswirkungen nur zum Teil durch aufwendige Wechselstrategien auf alternative Empfangsfrequenzen (z.B. in Verbindung mit dem Radio-Daten-System RDS) gemildert werden können.

Ein Empfänger für alternative Empfangsfrequenzen nach dem Radio-Daden-System ist beispielsweise aus der EP 0 415 132 A2 bekannt. Der bekannte Empfänger weist einen Speicher auf, in dem zusätzliche Informationen gespeichert sind, die Datensätze enthalten, die jeweils einem Sender zugeordnet sind. Mittels einer Anzeige können die zusätzlichen Informationen dargestellt werden. Ferner sind im Empfänger Mittel vorhanden, um, in Abhängigkeit von den zusätzlichen Informationen, die Empfangsparameter zu verändern.

Es wird deshalb seit einigen Jahren an einem Standard für ein neues terrestrisches, digitales Übertragungsverfahren gearbeitet, das unter der Bezeichnung "DAB" (Digital Audio Broadcasting) bekannt ist (s. dazu Zeitschrift "Funkschau-Spezial": Digitaler Ton - Von Hörfunk bis Mobiltelefon", Ausgabe 8/1990, Seiten 9 bis 18 oder Zeitschrift FERNSEH- UND KINO-TECHNIK: "Digitale terrestrische Sendetechnik für Hörfunk und Fernsehen", F. Müller-Römer, Nr. 11/1991, S. 575-583).

Eines der wesentlichen Systemkennzeichen des geplanten digitalen Übertragungssystems ist der Gleichwellenbetrieb der im Rahmen einer z.B. landesweiten Programmausstrahlung beteiligten Sendestationen. Das bedeutet die 100 %ige Übereinstimmung der Modulationsinhalte, sowie die frequenz- und phasenstarre Kopplung der Sender, die ein identisches Programm ausstrahlen, um eine störungsfreie Decodierung der Programmdaten zu ermöglichen.

Da das künftige DAB-Netz aber auch die Aufgaben des heutigen UKW-Verkehrsfunks übernehmen soll, widerspricht die z.B. landesweite Ausstrahlung derselben Verkehrsnachricht der Notwendigkeit, dem Autofahrer gezielt regionale oder lokale Verkehrshinweise zu übermitteln. Außerdem sollte dem Autofahrer, der von einem Sendegebiet in ein benachbartes überwechselt, eine grobe Standortinformation gegeben werden, damit sein Empfangsgerät automatisch oder manuell auf den Empfangskanal der Nachbarregion abgestimmt werden kann.

Aus der DE-C1-37 31 429 ist eine Rundfunkempfangseinrichtung für Kraftfahrzeuge bekannt, die dem Fahrzeugbenutzer Verkehrsfunkdurchsagen bedarfsgerecht zur Verfügung stellt. Hierbei werden Verkehrsfunkdurchsagen mehrerer Sender zunächst abgespeichert und anschließend wird mit einer Spracherkennungseinrichtung eine bestimmte Kennung gesucht. Beinhaltet eine Verkehrsfunkdurchsage z.B. das Wort "Stau" oder "Verkehrsunfall", so kann diese Verkehrsfunkdurchsage später abgerufen werden.

Bei dieser vorbekannten Rundfunkempfangseinrichtung ist von Nachteil, daß die erforderlichen Kennungen nur unregelmäßig auftreten. Weiterhin ist keine lokale Begrenzung für Verkehrsfunkdurchsagen möglich. Ein weiterer Nachteil liegt in der verringerten Erkennungswahrscheinlichkeit der Spracherkennungseinrichtung, die besonders bei Empfangsstörungen oder Hintergrundgeräuschen groß ist.

Aus der nicht vorveröffentlichten deutschen Patentanmeldung der Anmelderin mit dem amtlichen Aktenzeichen DE-A-4 102 408 ist ein Verfahren zur Sender- bzw. Regionalkennung in Gleichwellennetzen bekannt. Bei diesem Verfahren werden ein oder mehrere zusätzliche Einzelträgerfrequenzen gesendet, die sich regional voneinander unterscheiden. Dadurch ist eine Informationsübertragung möglich, deren Inhalt sich in Abhängigkeit von dem oder den empfangenen Sender(n) unterscheidet. Durch die zusätzlichen Einzelträgerfrequenzen kann dann auch ein Sender bzw. eine Region im Empfänger "erkannt" werden.

Bei diesem Verfahren ist von Nachteil, daß zusätzliche Übertragungsbandbreite durch die zusätzlichen Einzelträger benötigt wird.

Es ist deshalb Aufgabe der Erfindung, ein Verfahren zur regional begrenzten Informationsübertragung im Gleichwellennetz anzugeben, das den Gleichwellenbetrieb des Sendernetzes nicht stört. Ferner soll ein Empfänger zum Empfangen regional unterschiedlicher Informationen geschaffen werden.

Diese Aufgabe wird bei einem Verfahren der eingangs genannten Art durch die kennzeichnenden Merkmale des Patentanspruchs 1 gelöst, einen zugehörigen Empfänger betreffend durch die im Anspruch 4 angegebenen Merkmale.

Das erfindungsgemäße Verfahren zur Senderkennung hat den Vorteil, daß ohne Benutzung zusätzlicher Einzelträgerfrequenzen eine Vielzahl von Senderkennungen übertragen werden können. Dadurch besteht kein Bedarf an zusätzlicher Übertragungsbandbreite. insbesondere können die zur Verfügung stehenden Zeitschlitze besser genutzt werden. Ein weiterer Vorteil des Verfahrens besteht darin, daß außer der Senderkennung auch zusätzliche Information übertragen werden kann, die z.B. nur regional von Bedeutung ist oder sich regional unterscheidet. Die Variierung der zeitlichen Abfolge und insbesondere des Vorhandenseins von Einzelträgerfrequenzen weist zudem den Vorteil auf, daß in dem zur Übertragung genutzten Zeitschlitz im Mittel nur sehr wenig Energie übertragen werden muß.

Das Verfahren nach Anspruch 2 weist den Vorteil auf, daß ein relativ langer, bisher nur zur Synchronisation dienender Zeitschlitz für zusätzliche Information zur Verfügung steht. Die Verwendung von nur einem Teil der Einzelträger ermöglicht es, zusätzliche Information zu übertragen, ohne die Empfängersynchronisation zu stören. Die Verwendung zusätzlich ausgesendeter Einzelträgerfrequenzen ermöglicht es, sehr viel Information zu übertragen.

Das Verfahren nach Anspruch 3 weist den Vorteil auf, daß entweder aufgrund unterschiedlicher Einzelträgerfrequenz oder unterschiedlicher Sendezeiträume der Empfänger immer das Signal genau eines Senders auswählen kann. Dadurch sind Interferenzstörungen ausgeschlossen. Es besteht jedoch die Möglichkeit, weit auseinanderliegenden Sendern teilweise identische Einzelträgerfrequenzen und Sendezeiträume zuzuweisen.

Der erfindungsgemäße Empfänger nach Anspruch 4 weist den Vorteil auf, daß eine Senderkennung dazu benutzt wird, dem Benutzer zusätzliche Informationen zur Verfügung zu stellen. Diese Informationen können sich auf den gerade zum Empfang ausgewählten Sender beziehen, aber auch Informationen zu weiteren empfangbaren Sendern sein oder allgemeine regionale Informationen. Sie können sowohl angezeigt werden, als auch geräteintern verwertet werden.

Die Erfindung wird im folgenden anhand in den Zeichnungen dargestellter Ausführungsformen näher beschrieben und erläutert.

Es zeigen:
- Fig. 1: die Anordnung der Einzel-Trägerfrequenzen für ein länderbezogenes Gleichwellennetz
- Fig. 2a: eine mögliche Anordnung der Übertragungszeitschlitze beim Digital-Audio-Broadcasting Verfahren,
- Fig. 2b: die Übertragungszeitschlitze nach Fig. 2a, jedoch mit zusätzlicher Information und

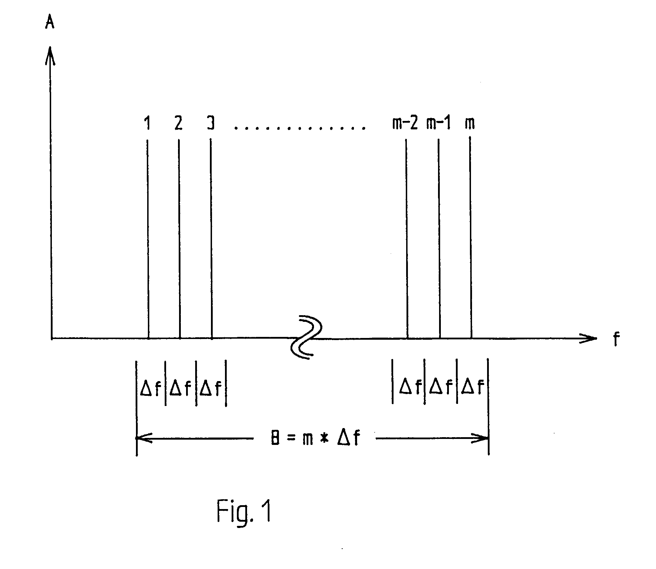

Entsprechend Fig. 1 werden beim DAB-Übertragungsverfahren innerhalb eines landesweiten Sendegebietes (z.B. 1536) Trägerfrequenzen mit äquidistantem Frequenzabstand Δf in einem Frequenzbereich mit der Bandbreite B gleichzeitig abgestrahlt. Die einzelnen Träger sind mit jeweils einem Teil der digitalen Daten moduliert, wobei die Modulationsinhalte der einzelnen Träger für sämtliche Sendestationen des Sendegebietes identisch sind. Wird im Zeitmultiplexbetrieb gearbeitet, so werden die Daten verschiedener Programme innerhalb der Datenpakete in zeitlicher Reihenfolge übertragen, so daß für einen Programmwechsel innerhalb des Programmangebotes einer bestimmten Sendeanstalt im Empfänger kein Wechsel der Abstimmfrequenzen, sondern nur ein Umschalten der zeitlich zugeordneten Decodierung der Datenpakete erfolgen muß. Der Dateninhalt eines Programms beschränkt sich nicht nur auf Audiosignale, sondern kann auch teilweise oder ausschließlich aus Informations- oder Steuerungsdaten (z.B. Bildübertragungs- oder Verkehrsleitdaten) bestehen.

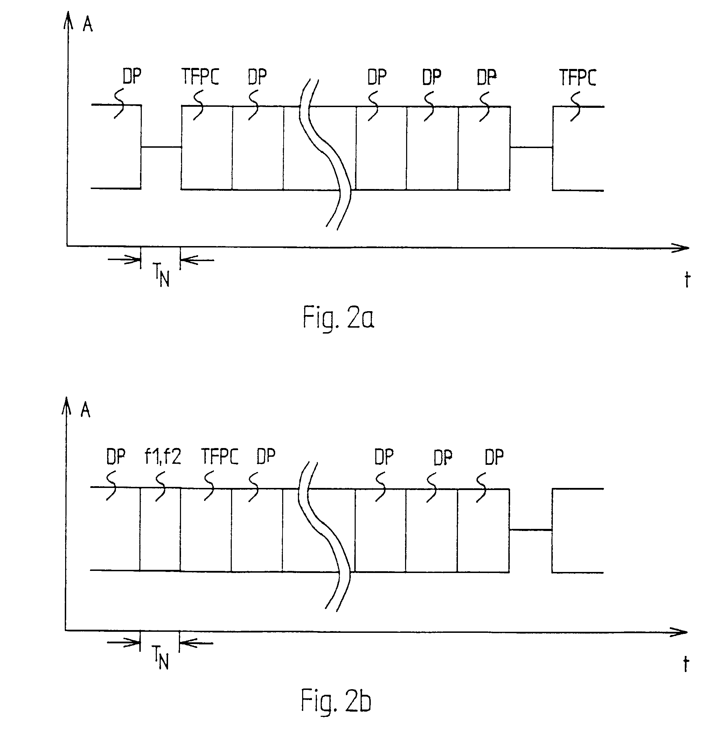

In Fig. 2a ist die zeitliche Anordnung der Datenpakete DP dargestellt. Beim DAB-Übertragungsverfahren ist ein Übertragungsrahmen in mehrere Zeitschlitze aufgeteilt. Im ersten Zeitschlitz erfolgt eine Grobsynchronisation des Empfängers. Hierfür ist eine Dauer TN von z.B. 1ms vorgesehen, in der die Empfangsleistung unter einem bestimmten Schwellenwert liegen muß, damit der Empfänger einen neuen Übertragungsrahmen detektieren kann. Dieser Zeitschlitz wird Nullsymbol genannt. Danach folgt das Time-Frequency-Phase Reference-Symbol TFPC zur Feinsynchronisation als Phasen- und Frequenzreferenz. In den nächsten Zeitschlitzen werden die Datenpakete DP übertragen. Der nächste Übertragungsrahmen beginnt dann wieder mit dem Nullsymbol zur Grobsynchronisation.

Die zusätzliche Information wird nun entsprechend Fig. 2b im Zeitschlitz des Nullsymbols übertragen. Da nicht die gesamte Übertragungsbandbreite B im Nullsymbol zur Übertragung genutzt wird, bleibt die übertragene Energie gering. Zur Datenübertragung im Nullsymbol wird nur eine Auswahl der zur Verfügung stehenden Einzelträgerfrequenzen, z.B. f₁ und f₂, gleichzeitig verwendet.

Durch eine zeitliche Verschachtelung der regional unterschiedlichen Information in den Nullsymbolen besteht die Möglichkeit, gleiche Einzelträgerfrequenzen von unterschiedlichen Sendern zu benutzen.

Ein erfindungsgemäßer Empfänger weist zur Durchführung des oben beschriebenen Verfahrens einen Speicher auf, in dem zusätzliche Informationen mittels eines jedem Sender zugeordneten Datensatzes abgespeichert sind, außerdem weist der Empfänger eine Anzeige auf, um zumindest einen Teil dieser Informationen dem Benutzer anzuzeigen, wobei der andere Teil der Informationen Daten enthält, die es dem Empfänger ermöglichen, Empfangsparameter zu verändern, wodurch die Empfangsqualität verbessert und/oder der Empfang regional unterschiedlicher Informationen erst ermöglicht wird.

## Patentansprüche

1. Verfahren zur Übertragung regional unterschiedlicher Informationen in Gleichwellennetzen, über die drahtlos digitale Informations- und/oder Steuersignale mit einer Vielzahl von Einzelträgern (1,2,...,m) die jeweils mit einem Teil des Nutzsignals moduliert sind, übertragen werden, wodurch eine Übertragung regional nicht unterschiedlicher Informationen, die im Gleichwellenbetrieb durch Pahsenmodulation der Einzelträger erfolgt, nicht gestört wird,
**dadurch gekennzeichnet,**
daß senderseitig die regionale Information durch das zusätzliche Aussenden einer der mehrerer aus der Vielzahl von Einzelträgerfrequenzen (f1,f2) und/oder die zeitliche Abfolge dieser Einzelträgerfrequenzen codiert und übertragen wird,
daß empfängerseitig die regional unterschiedliche Information aufgrund der empfangenen Einzelträgerfrequenzen oder Einzelträgerfrequenzen (f1,f2) und/oder deren zeitlicher Abfolge decodiert wird,
daß die Einzelträgerfrequenz oder Einzelträgerfrequenzen (f1,f2) in einem oder mehreren Zeitschlitzen eines Übertragungsrahmens übertragen werden, die zur Synchronisation des Empfängers genutzt werden.

2. Verfahren nach Anspruch 1,
**dadurch gekennzeichnet,**
daß die zusätzlich ausgesendete Einzelträgerfrequenz oder Einzelträgerfrequenzen (f1,f2) im Zeitschlitz des Null-Symbols (T_{N}) empfangen werden, wodurch sowohl eine Empfängersynchronisation als auch die Übertragung zusätzlicher Information ermöglicht wird.

3. Verfahren nach Anspruch 1 oder 2,
**dadurch gekennzeichnet,**
daß Sender, deren Funkversorgungsgebiete aneinander angrenzen, unterschiedliche Einzelträgerfrequenzen (f1,f2) und/oder unterschiedliche Zeiträume zum Aussenden regional unterschiedlicher Information benutzen, wodurch keine Interferenzstörungen auftreten können.

4. Empfänger für die Auswertung von regional unterschiedlichen Informationen in Gleichwellennetzen, über die drahtlos digitale Informations- und/oder Steuersignale mit einer Vielzahl von Einzelträgern (1,2,...m), die jeweils mit einem Teil des Nutzsignals moduliert sind, übertragen werden, wodurch eine Übertragung regional nicht unterschiedlicher Informationen, die im Gleichwellenbetrieb durch Phasenmodulation der Einzelträger erfolgt, nicht gestört wird, mit
einem Speicher, in dem zusätzliche Informationen mittels eines jeden Sender zugeordneten Datensatzes abgespeichert sind,
einer Anzeige, um zumindest einen Teil dieser Informationen dem Benutzer anzuzeigen, wobei der andere Teil der Informationen Daten enthält, mit denen der Empfänger seine Empfangsparameter verändert, um die Empfangsqualität zu verbessern und/oder regional unterschiedliche Informationen zu empfangen,
**dadurch gekennzeichnet,**
daß der Empfänger so ausgestattet ist, daß er die regional unterschiedlichen Informationen aufgrund einer oder mehrerer empfangener Einzelträgerfrequenzen (f1,f2) und/oder deren zeitlicher Abfolge, die in einem oder mehreren Zeitschlitzen eines Übertragungskanals enthalten sind, decodiert, wobei die Zeitschlitze vom Empfänger für die Synchronisation benutzt werden.

## Revendications

1. Procédé pour transmettre des informations différentes suivant les régions dans des réseaux à onde commune, au moyen desquels des signaux numériques d'informations et/ou des signaux numériques de commande sont transmis sans fil avec une multiplicité de porteuses individuelles (1, 2, 3, ..., m), qui sont modulées respectivement avec une partie du signal utile, ce qui a pour effet qu'une transmission d'informations non différente suivant les régions, qui s'effectue dans le fonctionnement à onde commune au moyen d'une modulation de phase des porteuses individuelles, n'est pas perturbée,
caractérisé en ce
que côté émetteur l'information régionale est codée par l'émission supplémentaire d'une ou de plusieurs fréquences parmi la multiplicité de fréquences porteuses individuelles (f1, f2) et/ou par la séquence temporelle de ces fréquences porteuses individuelles, et est transmise,
que côté récepteur l'information différente suivant les régions est décodée sur la base de la ou des fréquences porteuses individuelles reçues (f1, f2) et/ou de leur séquence temporelle,
que la ou les fréquences porteuses individuelles (f1, f2) sont transmises dans un ou plusieurs créneaux temporels d'une trame de transmission, qui sont utilisés pour la synchronisation du récepteur.

2. Procédé selon la revendication 1, caractérisé en ce que la ou les fréquences porteuses individuelles (f1, f2) émises en supplément sont reçues pendant le créneau temporel du symbole de zéro (T_{N}), ce qui permet aussi bien une synchronisation des récepteurs que la transmission d'une information supplémentaire.

3. Procédé selon la revendication 1 ou 2, caractérisé en ce que des émetteurs, dont les zones de couverture radio sont contiguës, utilisent des fréquences porteuses individuelles différentes (f1, f2) et/ou des intervalles de temps différents pour l'émission d'informations différentes au niveau des régions, ce qui empêche l'apparition de perturbations interférentielles.

4. Récepteur pour l'évaluation d'informations différentes suivant les régions dans des réseaux à onde commune, au moyen desquels des signaux numériques d'informations et/ou des signaux numériques de commande sont transmis sans fil avec une multiplicité de porteuses individuelles (1, 2, 3, ..., m), qui sont modulées respectivement avec une partie du signal utile, ce qui a pour effet qu'une transmission d'information non différente suivant les régions, qui s'effectue dans le fonctionnement à onde commun au moyen d'une modulation de phase des porteuses individuelles, n'est pas perturbée, comportant
une mémoire, dans laquelle des informations supplémentaires sont mémorisées au moyen d'un ensemble de données associées à chaque émetteur,
un dispositif d'affichage pour indiquer au moins une partie de ces informations à l'utilisateur, auquel cas l'autre partie des informations contient des donnés, à l'aide desquelles le récepteur modifie ses paramètres de réception de manière à améliorer la qualité de la réception et/ou à recevoir des informations différentes suivant les régions,
caractérisé en ce
que le récepteur est agencé de telle sorte qu'il décode les informations, différentes, suivant les régions, sur la base d'une ou plusieurs fréquences porteuses individuelles reçues (f1, f2) et/ou de la séquence temporelle de ces fréquences, qui sont contenues dans un ou plusieurs créneaux temporels d'un canal de transmission, les créneaux temporels étant utilisés par le récepteur pour la synchronisation.

## Claims

1. Method for transmitting regionally different items of information in common-frequency networks via which digital information signals and/or control signals are wirelessly transmitted using a multiplicity of individual carriers (1, 2, ..., m) which are each modulated with a part of the useful signal, as a result of which transmission of regionally identical items of information, which in common-frequency operation takes place by phase modulation of the individual carriers, is not interfered with,
characterized
in that, on the transmitter side, the regional information is coded and transmitted by the additional broadcasting of one or more of a multiplicity of individual carrier frequencies (f1, f2) and/or by the time sequence of said individual carrier frequencies,
in that, on the receiver side, the regionally different information is decoded on the basis of the received individual carrier frequency or frequencies (f1, f2) and/or of their time sequence, and
in that the individual carrier frequency or frequencies (f1, f2) are transmitted in one or more time slots of a transmission frame which are utilized to synchronize the receiver.

2. Method according to Claim 1, characterized in that the additionally broadcast individual carrier frequency or frequencies (f1, f2) are received in the time slot of the zero symbol (T_{N}), as a result of which both a receiver synchronization and the transmission of additional information are made possible.

3. Method according to Claim 1 or 2, characterized in that transmitters whose radio service areas are adjacent to one another utilize different individual carrier frequencies (f1, f2) and/or different time intervals to broadcast regionally different information, as a result of which no interference disturbances can occur.

4. Receiver for evaluating regionally different items of information in common-frequency networks via which digital information signals and/or control signals are wirelessly transmitted using a multiplicity of individual carriers (1, 2, ..., m) which are each modulated with a part of the useful signal, as a result of which a transmission of regionally identical items of information, which in common-frequency operation takes place by phase modulation of individual carriers, is not interfered with, comprising
a memory in which additional items of information are stored by means of a data record assigned to each transmitter,
a display for displaying at least some of said items of information for the user, the remaining items of information containing data with which the receiver alters its reception parameters in order to improve the reception quality and/or to receive regionally different items of information,
characterized in that the receiver is equipped to decode regionally different items of information on the basis of one or more received individual carrier frequencies (f1, f2) and/or of their time sequence which are contained in one or more time slots of a transmission channel, the time slots of the receiver being used for the synchronization.
